# EUROPEAN PATENT APPLICATION

(11) **EP 0 942 193 A2**
(43) Date of publication of application: **15.09.1999**
(21) Application number: 99103178.2
(22) Date of filing: 18.02.1999
(51) Int. Cl.: F16F 9/05, B60G 11/27, B60G 17/052

(54) **Fluted air actuator**

(30) Priority: 11.03.1998 US 38880
(71) Applicant: BRIDGESTONE/FIRESTONE, Inc., Akron, Ohio 44317-0001 (US)
(72) Inventor: Ecktman, Jack D., Indianapolis, IN 46268 (US)
(74) Representative: von Raffay, Vincenz, Dipl.-Ing.

(57) **Abstract**

An air actuator has a pair of spaced end members for mounting the air actuator at spaced locations on a structure. A flexible sleeve of elastomeric material is sealingly engaged with the end members and forms a pressurized fluid chamber therebetween. One of the end members is a piston assembly of a fluted construction with a negatively tapered outer wall provided by the flutes positioned along the outer wall whereby the flutes are designed to enable the piston to be formed in a less expensive manner using a straight core tool. The interior chamber of the piston assembly is of a cylindrical shape with a uniform annular wall and a base.

## Description

### BACKGROUND OF THE INVENTION

### Technical Field

The invention relates to air actuators, such as air sleeves, air pistons, air springs, and other pneumatic actuators, and more particularly, to the design and manufacture of a negative taper piston assembly for use in the air spring in conjunction with an end cap connected thereto by a resilient elastomeric sleeve. Specifically, the invention relates to the piston assembly that is utilized in an air spring where the piston assembly is of a fluted construction with a negatively tapered outer wall provided by the tapered flutes positioned along the outer wall whereby the flutes are designed to enable the piston to be formed in a less expensive manner using a straight core tool.

### Background Information

Pneumatic assemblies such as air actuators and springs have been used for many years for various purposes. The air actuator usually consists of a flexible rubber sleeve or bellows containing a supply of compressed fluid and a feed for increasing or decreasing the compressed fluid therein. The flexible sleeve is formed of a flexible elastomeric material often containing reinforcing cords, where the flexibility of the material permits a first end cap to move axially with respect to another end cap secured within the ends of the sleeve as the amount of compressed fluid is changed. Since the air actuator is positioned in between a movable or actuatable object, and typically a fixed object, the movable object moves in correlation to this axial movement.

As to pneumatic springs commonly referred to as air springs, the construction is similar to that of an air actuator whereby a flexible rubber sleeve or bellows contains a supply of compressed fluid. However, the supply of compressible fluid is typically fixed and the air spring has one or more pistons movable with respect to the flexible sleeve whereby the pistons cause compression and expansion of the fixed quantity of fluid within the sleeve as the sleeve stretches or retracts, respectively, to absorb shock loads and/or dampen vibrations. The flexible sleeve is similarly formed of a flexible elastomeric material containing reinforcing cords and this permits the piston to move axially with respect to another piston or end cap secured within the open ends of the sleeve. One application for air springs is with motor vehicles where the spring provides cushioning between movable parts of the vehicle, primarily to absorb shock loads impressed on the vehicle axles by the wheel striking an object in the road or falling into a depression.

In the air actuator and air spring art, it is well known to use negative taper pistons to provide lower rates and therefore better isolation capabilities. Each of these negative taper pistons is basically a piston with a hollow chamber with an open end or access where the piston has an outer surface that includes a horizontal top or end, a transition surface, an inverted frusto-conical side, and a smaller diameter neck or collar for receiving the crimped sleeve.

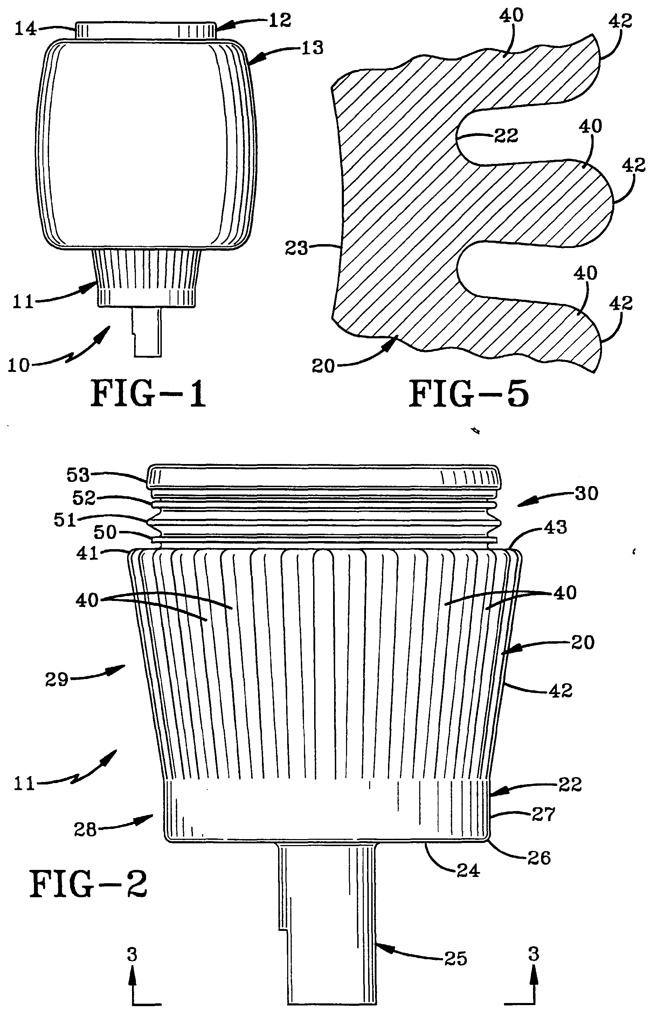

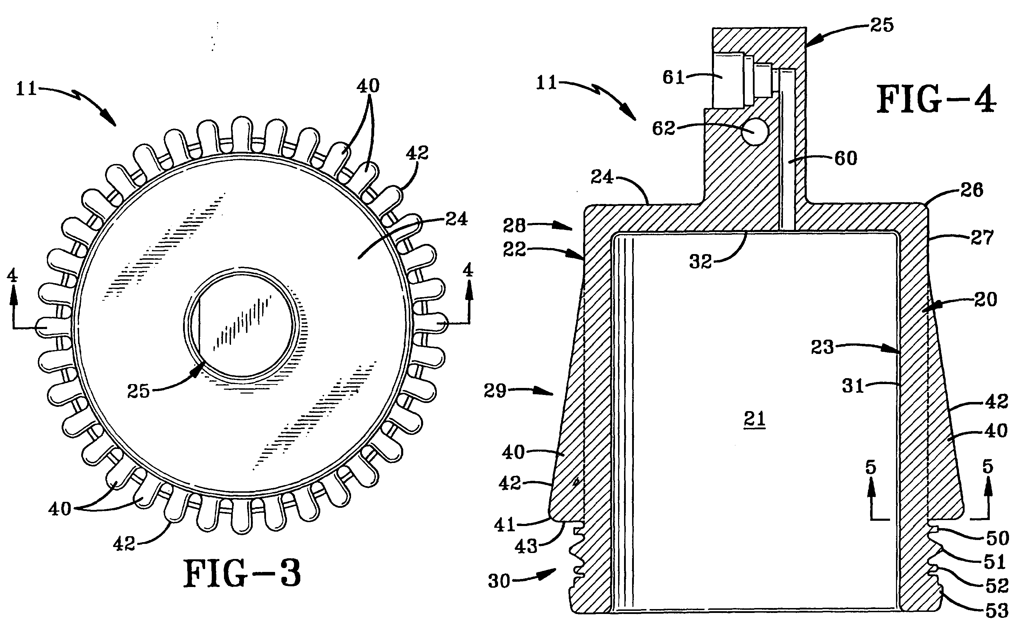

An example of another type of a negative taper piston is found in WIPO Patent No. 79/00411 filed in the name of Pierce and assigned to Lear Siegler, Inc. WIPO Patent No. 79/00411 discloses an air spring assembly utilizing a piston having an inverted frusto-conical side. Figs. 1 and 2 in the WIPO Patent disclose the air spring assembly to include an open, hollow piston with a reservoir having an outer surface that includes a horizontal top, a curved outer surface or transition, and an inverted frusto-conical side, which terminates into an outwardly flared bottom portion.

In this and other prior art negative taper pistons, a number of problems or disadvantages exist. These problems and disadvantages are particularly problematic to the prior art design as shown in Fig. 6. One of the principal disadvantages is that negative taper pistons are very expensive to make. A second disadvantage, above and beyond the high tooling costs of manufacture of negative taper pistons, is the longer cycle time needed in manufacturing each and every piston with a negative taper design. Both of these disadvantages are related in that the nature of negative taper pistons requires a nonuniform core during molding of the piston. Specifically, the piston is molded around the core and since the outer wall of the piston requires a negative taper, the core must be similarly tapered. However, after molding, a rigid and tapered core is not removable since the tapered core becomes stuck due to its diameter being larger than that of the neck or collar. For this reason, current prior art negative taper pistons are created by a collapsible core that is inflated or otherwise mechanically moved outward from the main body of the core to create this taper. The added expense of this complex tool with a collapsible core is a significant disadvantage. Furthermore, the operation of the core to create the negative taper adds two steps and significant time to the manufacture process. Specifically, the collapsible core must be inflated or otherwise mechanically moved radially outward from the central core as a step 1 prior to formation of the air piston around the core, and then after such formation this radially extending part must be collapsed as a step 2 such that the core returns to a symmetrical shape of a diameter smaller than that of the inner diameter of the neck or collar thereby allowing the core to be removable from the now formed piston.

Clearly, significant disadvantages in cost and time are incurred when manufacturing negative taper pistons in comparison to standard pistons for air springs. It would therefore be desirable to improve the manufacture of negative taper pistons to be more comparable to that of standard pistons.

### SUMMARY OF THE INVENTION

Objectives of the invention include providing an improved air actuator or spring.

A further objective of the invention is to provide an improved air spring of a negative taper piston design.

A further objective of the invention is to provide such an improved negative taper piston for an air spring which has better isolation capabilities.

A further objective of the invention is to provide such a negative taper piston for an air spring which has lower rates and therefore better isolation capabilities.

A further objective of the invention is to provide a negative taper piston for an air spring where the negative taper piston is of an improved design that is less expensive to make than the current state of the art.

A further objective of the invention is to provide a negative taper piston for an air spring where the negative taper piston is constructed with lower tooling costs than the current state of the art.

A further objective of the invention is to provide a negative taper piston for an air spring where a noncollapsible core tool is used in the manufacture process and therefore tooling cost is lower than that of the current state of the art.

A further objective of the invention is to provide a negative taper piston for an air spring in which shorter manufacturing cycle time is accomplished.

A further objective of the invention is to provide a negative taper piston for an air spring where a straight core tool is useable during manufacture rather than one with a collapsible core.

These objectives and advantages are achieved by the improved negative taper piston of the invention, the general nature of which may be stated as including a first and second end member and a flexible sleeve, where one end member includes a negative taper design. Each of the end members is adapted to be mounted at generally axially spaced locations. The flexible sleeve is formed of an elastomeric material containing reinforcing cords and having open ends sealingly engaged with the end members forming a pressurized fluid chamber therebetween. The first end member is configured as a piston member having a piston body of a negative taper design with an interior cylindrical chamber.

### BRIEF DESCRIPTION OF THE DRAWINGS

A preferred embodiment of the invention, illustrative of the best mode in which applicants have contemplated applying the principles, is set forth in the following description and is shown in the drawings and is particularly and distinctly pointed out and set forth in the appended claims.
FIG. 1 is an elevational view of the improved air sleeve with a fluted negative taper piston;
FIG. 2 is an elevational view of the fluted negative taper piston;
FIG. 3 is a bottom plan view of the fluted negative taper piston taken along lines 3-3 in FIG. 2;
FIG. 4 is a sectional view of the fluted negative taper piston taken along lines 4-4 in FIG. 3;
FIG. 5 is a greatly enlarged fragmentary sectional view showing several of the flutes that longitudinally extend along the negative taper piston where the sectional view is taken along lines 5-5 in FIG. 4; and
FIG. 6 is a sectional view of a prior art negative taper piston.

Similar numerals refer to similar parts throughout the drawings.

### DESCRIPTION OF THE PREFERRED EMBODIMENT

The improved air spring of the invention is shown in FIG. 1 and indicated generally at 10. Air spring 10 includes axially spaced end members 11 and 12, with a flexible sleeve 13 of elastomeric material extending therebetween and clampingly engaged to end members 11 and 12 at the open ends of the sleeve by clamp rings 14. Once fully assembled, sleeve 13 and end members 11 and 12 form an internal fluid pressure chamber that is pressurizable with a compressed fluid so as to function as a shock absorber and/or load dampener.

In accordance with the main feature of the invention, end member 11 is a fluted air spring piston of an improved construction and design. Piston 11 is more clearly shown in FIGS. 2-4. Piston 11 includes an open, hollow piston 20 with a chamber or reservior 21 having an outer surface 22 and an inner surface 23. The outer surface 22 includes a horizontal top or end 24 with a base 25 extending therefrom, a curved or rounded outer corner or transition 26, and a vertical annular outer surface 27 comprising a cylindrical portion 28, a fluted portion 29, and a neck or collar region 30. The inner surface 23 is generally configured as a cylindrical surface having an annular wall 31 with a base 32.

In further accordance with the main feature of the invention, the vertically annular outer surface 27 includes a plurality of flutes 40 extending vertically along outer surface 22 of piston 11 from cylindrical portion 28 to neck 30 thereby forming fluted position 29. Preferably, these flutes are equally spaced around the entire outer surface as is shown in Fig. 3. Each of these flutes 40 is of a tapered design that slopes from the cylindrical portion 28 outward to an outermost point 41 thereby defining the outwardly tapering surface 42 and a radial shoulder 43. The outermost point or surface 41 is generally rounded. The effect of this design when taken in cross section as shown in Fig. 4 is a tapered piston design in which the outer surface 27 has an inverted frusto-conicle shape which terminates in an inwardly extending shoulder 43.

In accordance with this invention, each of these flutes 44 tapers outward so as to in combination define a negative taper in the outer surface of the piston to provide lower rates and therefore better isolation capabilities. However, the molding of these flutes in the exterior surface 22 of the piston 11 rather than within the inner surface 23 allows each piston to be molded using a symmetrical and cylindrical core of the exact shape of chamber 21 and without any collapsible mechanism therein. As a result, the piston is significantly less expensive to make than the prior art versions such as that shown in Fig. 6. In addition, the cycle time needed in manufacturing is significantly reduced.

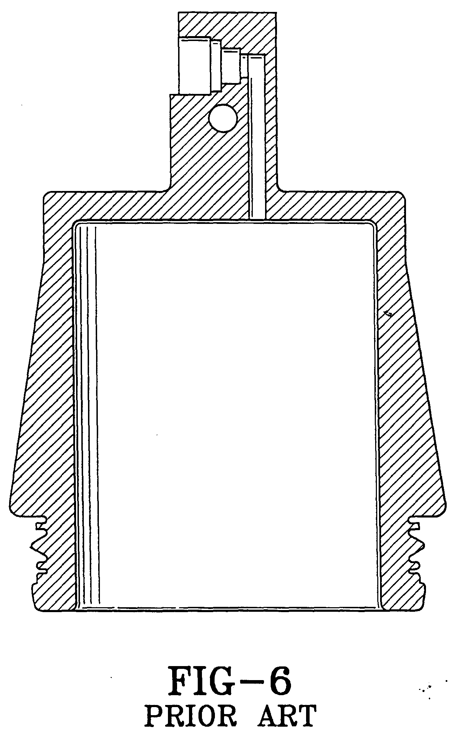

In one of the embodiments, each flute 40 is rounded about its outermost point 41 as well as along its longitudinal edges extending from cylindrical portion 28 to this outermost point 41 so as to provide a smooth contour along all of its edges as is shown in Figs. 3 and 4. In addition, the valleys between each of the flutes are generally rounded, beveled, or otherwise radiused. This is clearly shown in Fig. 5.

In sum as to this main feature of the invention, the invention is manufactured using a straight core while producing a negative taper using tapered flutes molded into the exterior surface of the piston 11. In contrast to the prior art designs, instead of requiring a collapsible core for injection molded plastic tools or die cast aluminum tools, a straight core tool is used while the outer wall is fluted to maintain the required negative taper. One of the primary advantages of the invention is lower tooling costs (because a noncollapsible core tool which is often cylindrical may be used) and lower per piece price (due to shorter cycle times). The actual flute dimensions will vary depending upon the amount of negative taper, although the flute width and depth should be as small as possible to reduce potential dirt cavities or wear points. The depth being the distance from the valley to the outermost point, while the width being the distance between flutes.

In accordance with another of the features of the present invention, the neck or collar portion 30 is designed to receive an annular clamping ring having a recess on the inner diameter thereof to coact with corresponding annular projections on the outer diameter of this neck or collar region The projection and clamping surfaces form a series of pinch areas with the intervening sleeve thereby sealingly clamping the sleeve therebetween. The expansion grooves receive portions of the sleeve and change the direction of the reinforcing cord within the sleeve. In addition, the radial extending grooves trap a partially compressed end of the sleeve therein to provide for additional material expansion area.

As is shown in Figs. 2 and 4, in at least one embodiment, the preferred design of the annular projections on neck 30 is the following: a first or innermost annular projection 50 extends radially outward from neck 30 in a substantially rectangular fashion with two outermost substantially 90° edges but with inner radiused curves joining the annular projection to the neck. A second annular projection 51 is of a triangular cross sectional shape with rounded or radiused inner curves connecting it to the neck 30 as well as a rounded or radiused outermost point or surface. The third and outermost annular projection 52 is of a similar construction to projection 50 except that rather than having a rectangular configuration, the configuration is more of a semi-capsule shape with a curved or rounded outer surface rather than having two 90° edges. In addition, neck 30 contains a flange 53 for holding the crimped or clamped ring 14 onto the neck 30, over the sleeve 13, adjacent to the annular projections 50-52.

In accordance with another of the features of this invention, the base 25 of piston 11 includes an axial tube 60 extending to a cavity 61 of a stepped construction designed for receiving a brass cartridge for holding nylon tubing. For the purpose of receiving a fluid feed line should the air spring be used as an air actuator or should the air spring have a need for adjusting the supply of compressible fluid therein. In addition, base 25 also includes a hole 62 for receiving a hairpin cotter or similar fastening device.

Accordingly, the improved air actuator is simplified, provides an effective, safe, inexpensive, and efficient device which achieves all the enumerated objectives, provides for eliminating difficulties encountered with prior devices, and solves problems and obtains new results in the art.

In the foregoing description, certain terms have been used for brevity, clearness and understanding; but no unnecessary limitations are to be implied therefrom beyond the requirement of the prior art, because such terms are used for descriptive purposes and are intended to be broadly construed.

Moreover, the description and illustration of the invention is by way of example, and the scope of the invention is not limited to the exact details shown or described.

Having now described the features, discoveries and principles of the invention, the manner in which the improved air actuator is constructed and used, the characteristics of the construction, and the advantageous, new and useful results obtained; the new and useful structures, devices, elements, arrangements, parts and combinations, are set forth in the appended claims.

## Claims

1. An improved air actuator comprising:
a first and second end member, each of the end members adapted to be mounted at generally axially spaced locations;
a flexible sleeve formed of an elastomeric material containing reinforcing cords and having open ends sealingly engaged with the end members forming a pressurized fluid chamber therebetween; and
the first end member configured as a piston member having a piston body with an interior cylindrical chamber and an outer surface negatively tapered.

2. The improved air actuator of claim 1 wherein the outer surface of the piston member includes a plurality of flutes defining the negative taper.

3. The improved air actuator of claim 2 wherein the piston member includes an annular outer surface in which each of the plurality of flutes outwardly and radially extends.

4. The improved air actuator of claim 3 wherein the annular outer surface includes a cylindrical portion, a tapered portion, and a neck portion.

5. The improved air actuator of claim 4 wherein the tapered portion includes the plurality of flutes equally spaced around the entire periphery of the annular outer surface.

6. The improved air actuator of claim 5 wherein each flute extends from the cylindrical portion to the neck portion.

7. The improved air actuator of claim 6 wherein each flute includes a tapered surface extending from the cylindrical portion in an approximately tangent manner to an outermost rounded corner.

8. The improved air actuator of claim 7 wherein a radially extending shoulder projects from adjacent the neck portion outward to the rounded corner.

9. The improved air actuator of claim 8 wherein all edges on each flute are rounded, radiused, or beveled.

10. The improved air actuator of claim 9 wherein each of the flutes is separated from an adjacent flute by a valley defined as a continuation of the cylindrical portion.

11. An improved air spring of the type having a pair of spaced end members adapted to be mounted at spaced locations and a flexible sleeve formed of an elastomeric material sealingly engaged with the end members and forming a pressurized fluid chamber therebetween, said improvement including one of the spaced end members being a piston having an internal cylindrical chamber with an open end and a negatively tapered external surface.

12. The improved air spring of claim 11 wherein the negatively tapered external surface includes a plurality of flutes.

13. The improved air spring of claim 12 wherein the plurality of flutes are equally spaced about the entire periphery of the piston member.

14. The improved air spring of claim 13 wherein each of the flutes taper outward as the flutes extend toward the open end of the internal chamber.

15. The improved air spring of claim 14 wherein the piston member further includes an annular sealing surface having a plurality of annular projections extending radially outward therefrom.

16. The improved air spring of claim 15 wherein the plurality of annular projections includes an innermost annular projection, an intermediate annular projection, and an outermost annular projection.

17. The improved air spring of claim 16 wherein the innermost annular projection has a cross sectional shape defined by a rectangular outermost surface including a pair of substantially 90° edges.

18. The improved air spring of claim 16 wherein the intermediate annular projection has a cross sectional shape of a triangular design.

19. The improved air spring of claim 16 wherein the outermost annular projection has a rounded cross sectional shape.
